# EUROPÄISCHE PATENTSCHRIFT

(11) **EP 1 479 809 B1**
(45) Veröffentlichungstag und Bekanntmachung des Hinweises auf die Patenterteilung: **13.12.2006**
(21) Anmeldenummer: 04009251.2
(22) Anmeldetag: 20.04.2004
(51) Int. Cl.: D05B 69/00

(54) **Nähmaschine mit einem Sensor zur Erfassung der Nähgut-Dicke**
Sewing machine with a sensor for measuring the thickness of the fabric
Machine à coudre avec un capteur de mesure de l'épaisseur du tissu

(30) Priorität: 22.05.2003 DE 10323158
(43) Veröffentlichungstag der Anmeldung: 24.11.2004
(73) Patentinhaber: DÜRKOPP ADLER AKTIENGESELLSCHAFT, D-33719 Bielefeld (DE)
(72) Erfinder: Hosagasi, Sevki, Dr.-Ing., 33699 Bielefeld (DE)
(74) Vertreter: Rau, Manfred

(56) Entgegenhaltungen:
- EP-A- 0 997 567
- US-A- 4 574 719
- US-A- 4 696 246
- US-A- 4 829 194

## Beschreibung

Die Erfindung betrifft eine Nähmaschine mit einem Sensor zur Erfassung der Nähgut-Dicke nach dem Oberbegriff von Anspruch 1.

Eine derartige Nähmaschine ist aus der DE 35 28 295 C2 (entsprechend US 4,686,917) bekannt, bei der die Dicke des Nähguts durch einen in Nährichtung vor der Stichbildestelle angeordneten Tasthebel abgetastet wird, dessen Winkelstellung über ein elektronisches Messelement in entsprechende Messwerte umgesetzt wird. Je nach dem Meßwert werden über eine elektronische Steuerung Schaltbefehle an Stellmotoren der Nähmaschine abgegeben, um beispielsweise die Hubhöhe an altemierend arbeitenden Stoffdrückerfüssen einzustellen. US-A-4 574 713 offenbart auch eine derartige Nähmaschine.

Nachteilig ist, dass sich der Tasthebel im Arbeitsbereich unmittelbar vor den Stoffdrückerfüßen befindet, in dem die Bedienungsperson das Nähgut führt. Bereits das Einlegen des Nähguts in den Stichbildebereich der Nähmaschine muss mit Sorgfalt erfolgen, um das Nähgut unter dem Tasthebel zu positionieren. Aber auch während des Nähens muss die Bedienungsperson für eine ungestörte Arbeitsweise des Tasthebels Sorge tragen. Weiter wirkt sich der Tasthebel störend beim Führen des Nähguts aus, wenn bogenförmig verlaufende Nähte hergestellt werden sollen. Zusammenfassend sind störende Einflüsse des Tasthebels auf den Arbeitsbereich der Bedienungsperson nicht zu vermeiden.

Aus der DE 37 17 601 A1 ist ein Werkstückdetektor für eine Nähmaschine bekannt, bei dem die Stellung eines vor der Stichbildestelle der Nähmaschine befmdlichen Tasthebels kinematisch mit einem Potentiometer gekoppelt ist. Je nach der Dicke des abgetasteten Nähgutteils werden entsprechende Messwerte ausgegeben. Wenngleich die Dicke des Nähguts damit erfassbar ist, so gelten auch für diesem Werkstückdetektor die mit dem Tasthebel verbundenen Nachteile.

Der Erfindung liegt die Aufgabe zugrunde, eine Nähmaschine der gattungsgemäßen Art mit einem Sensor auszustatten, die eine unbeeinträchtigte Arbeitsweise ermöglicht.

Diese Aufgabe wird erfindungsgemäß durch die Merkmale im Kennzeichenteil des Anspruchs 1 gelöst. Durch die erfindungsgemäßen Maßnahmen ist es möglich, aus einer Zeitspanne zwischen ausgesendeten Schallimpulsen und dem Empfang von einem Echosignal die Entfernung zu der Auflageplatte der Nähmaschine und einem darauf aufliegenden Nähgutteil zu ermitteln. Dies führt zu einem Arbeitsbereich der Bedienungsperson, der frei von jeglichen Beeinflussungen ist. Mit der Eigenschaft des Ultraschall-Sensors, nicht eine Schallintensität sondern eine Schall-Laufzeitmessung vorzunehmen, wird erreicht, dass störende Umfeldbedingungen nahezu ausgeschlossen werden, womit ein breites Spektrum an Materialien, beispielsweise Leder oder Samt, unabhängig von ihrer Farbe, Lichtdurchlässigkeit und sonstigen physikalischen Eigenschaften detektierbar sind. Ein weiterer Vorteil ergibt sich daraus, dass die Dickenmessung auch in staubiger Umgebung ausführbar ist.

Mit der Ausgestaltung nach Anspruch 2 wird eine platzsparende Bauweise erzielt, so dass auch das Blickfeld der Bedienungsperson auf den Arbeitsraum nahezu unbeeinträchtigt ist.

Mit der Weiterbildung nach Anspruch 3 wird eine selbsttätige Ermittlung des Abstands erreicht, in dem der Sensor oberhalb der Auflageplatte der Nähmaschine angeordnet ist. Dies bringt den Vorteil, dass die Befestigung des Sensors an dem Nähmaschinenarm durch mit Freimaß-Toleranzen gefertigte Teile erfolgen kann. Ebenso ist die Montage des Sensors nach einer Reparatur an der Maschine ohne besondere Ausrichtarbeit einfach ausführbar. Ferner wird mit dieser Weiterbildung eine ständige Aktualisierung des den Abstand zwischen Sensor und Auflageplatte der Nähmaschine repräsentierenden Wertes erreicht, so dass eine etwaig auftretende Beeinflussung des Messergebnisses infolge von Veränderungen der Lufteigenschaften (Druck, Temperatur, Feuchtigkeit) ausgeschaltet wird.

Die Weiterbildung nach Anspruch 4 gestattet die Verarbeitung von Verdickungen, allgemein also von in der Dicke variierender Nähgutteile, mit der Auslösung einer dementsprechenden Schaltfunktion.

Ein besonderer Vorteil wird durch die Weiterbildung mit den Merkmalen von Anspruch 5 erreicht, mit dem ein Hantieren der Bedienungsperson im Arbeitsbereich des Sensors im unmittelbaren Bereich vor der Stichbildestelle zwecks Führung des Nähguts ermöglicht wird. Hierbei bleiben Messergebnisse ab einer vorgegebenen Maximal-Dicke unberücksichtigt, die der Ultraschall-Sensor zum Beispiel bei der Erfassung eines Fingers oder der Hand der Bedienungsperson an die Steuerung abgibt.

Weitere Vorteile, Merkmale und Einzelheiten der Erfindung ergeben sich aus der nachfolgenden Beschreibung eines Ausführungsbeispiels an Hand der Zeichnung. Es zeigt:
- Fig. 1: eine Ansicht auf den Kopf einer Nähmaschine,
- Fig. 2: eine Vorderansicht der Nähmaschine in verkleinertem Maßstab entsprechend dem Sichtpfeil II in Fig. 1 und
- Fig. 3: schematische Darstellung eines Teils der Steuerung für die Nähmaschine.

Eine Nähmaschine 1 weist eine Grundplatte 2 mit einem sich davon aufwärts erstreckenden Ständer 3 und einem abgewinkelten Arm 4 auf, der in einem Kopf 5 endet. In dem Arm 4 ist drehbar eine Armwelle 6 gelagert, die an dem ständerseitigen Ende mit einem Handrad 7 verbunden ist. Dieses ist über einen Riementrieb 8 mit einem Antriebsmotor 9 verbunden, der an dem Arm 4 befestigt ist.

Das freie Ende der Armwelle 6 ist innerhalb des Kopfes 5 in der bekannten Weise mit einem Kurbeltrieb (nicht dargestellt) für den Antrieb einer Nadelstange 10 verbunden, die an ihrem der Grundplatte 2 zugewandten Ende eine Nähnadel 11 trägt.

Mit dem Kurbeltrieb ist antriebsmäßig ein Fadenhebel 12 verbunden, dessen freies Ende 13 durch eine in dem Kopf 5 eingebrachte Öffnung 14 herausragt. In einem Bereich neben der Öffnung 14 ist an dem Kopf 5 eine elektromagnetisch betätigbare Fadenspannvorrichtung 15 angebracht. Weiter sind an dem Arm 4 Ösen 16, 17 angeordnet. Der Nähmaschine 1 wird ein Faden 18 von einer Vorratsrolle (nicht dargestellt) zugeführt, wobei der Faden 18 durch die Öse 16 zu der Fadenspannvorrichtung 15, von dort durch eine in dem Ende 13 des Fadenhebels 12 befindliche Öse, von dort durch die Öse 17 und schließlich durch das Öhr der Nähnadel 11 hindurch geführt ist.

An der Grundplatte 2 ist eine Stichplatte 19 befestigt, die ein Stichloch 20 für den Durchtritt der Nähnadel 11 aufweist. Unterhalb der Stichplatte 19 befindet sich ein Greifer (nicht dargestellt) als ein mit der Nähnadel 11 zusammenwirkendes Stichbildeelement. Die Nähnadel 11 und das Stichloch 20 bilden eine Stichbildestelle 21. Weiter befindet sich im Bereich des Stichlochs 20 ein Stoffschieber 22, der durch entsprechende Aussparungen in der Stichplatte 19 hindurch tritt.

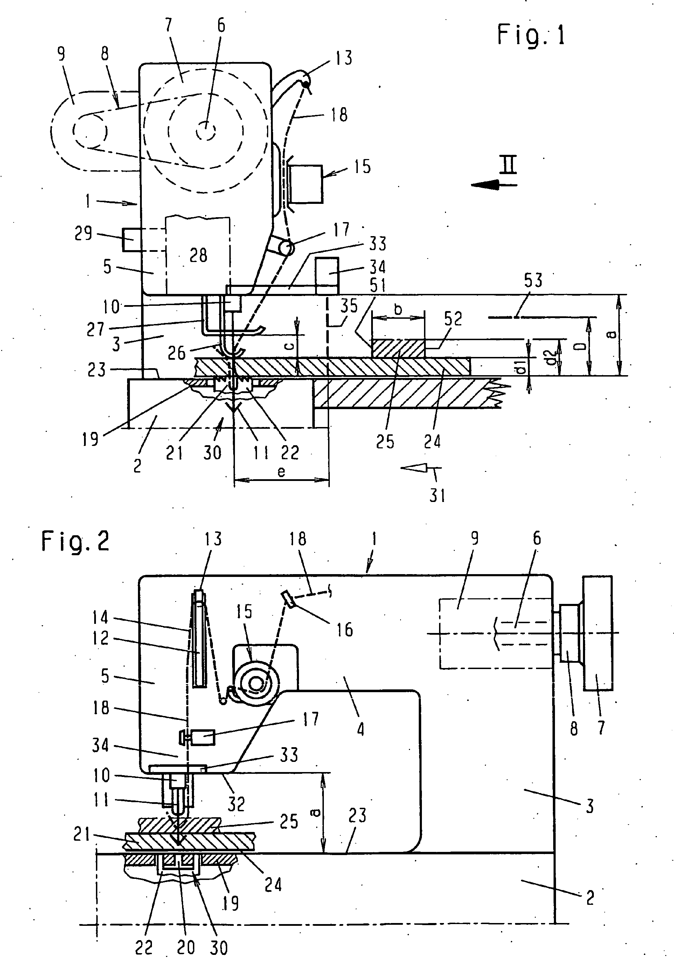

Auf der Oberseite der Grundplatte 2, die als Auflageplatte 23 bezeichnet wird, liegt ein erstes Nähgutteil 24 auf, welches eine Dicke d1 aufweist. Wie in Fig. 1 dargestellt ist, befindet sich auf dem ersten Nähgutteil 24 ein zweites Nähgutteil 25, welches eine Breite b aufweist. Das zweite Nähgutteil 25 kann beispielsweise ein mit dem ersten Nähgutteil 24 zu vernähender Nähgut-Streifen oder ein Keder-Teil, allgemein eine sonstwie gestaltete Nähgut-Verdickung sein. Diese aus den beiden aufeinandergelegten Nähguteilen 24, 25 gebildete Nähgutverdickung weist eine Dicke d2 auf.

Auf dem Nähgutteil 24 stützt sich ein Drückerfuß 26 ab, während sich ein zweiter Drückerfuß 27 in einer davon angehobenen Stellung gemäß der Darstellung in Fig. 1 befindet. Die Drückerfüße 26, 27 sind Bestandteile einer sogenannten alternierend arbeiten Stoffdrückereinrichtung 28, die antriebsmäßig mit der Armwelle 6 gekoppelt ist. Die Drückerfiiße 26, 27 sind im Wechsel, also alternierend von der Oberseite des Nähgutteils 24 oder 24 und 25 um einen Hub c anhebbar, wobei der Hub c während des Laufs der Nähmaschine 1 durch ein Stellglied 29 veränderbar ist. Die Stoffdrückereinrichtung 28 ist aus der eingangs genannten Druckschrift bekannt ist.

Der genannte Stoffschieber 22 ist Teil einer Vorschubeinrichtung 30, die antriebsmäßig mit der Armwelle 6 verbunden ist. In Verbindung mit der Stoffdrückereinrichtung 28 übt die Vorschubeinrichtung 30 eine Vorschubbewegung auf das Nähgutteil 24 oder die Nähgutteile 24, 25 in einer Vorschubrichtung 31 aus.

An einer unteren Fläche 32 des Kopfes 5 ist eine Haltearm 33 fest angebracht, dessen freies Ende sich entgegen der Vorschubrichtung 31 erstreckt und dort mit einem Sensor 34 versehen ist. Dieser ist als Ultraschall-Sensor ausgebildet, der Schallwellen im Frequenzbereich von 0,1 bis 1 Megahertz aussendet und entsprechende Echo-Wellen empfängt. Derartige Ultraschall-Sensoren sind auf dem Markt verfügbar. In Fig. 1 ist ein Strahlengang 35 dieser Schallwellen durch eine gestrichelte Linie symbolisch dargestellt. In einer Blickrichtung in der Vorschubrichtung 31 befindet sich der Strahlengang 35 in einem Abstand e vor der Stichbildestelle 21.

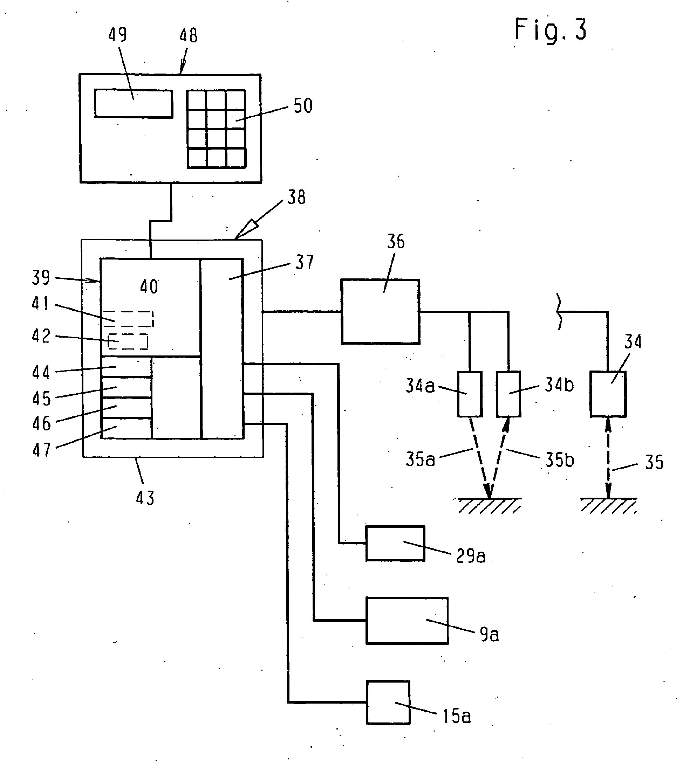

Gemäß Fig. 3 weist der Sensor 34 einen Senderteil 34a, einen Empfängerteil 34b auf, wobei beide Bauteile von einer elektronischen Schaltung 36 ansteuerbar sind. Dementsprechend sind an dem Senderteil 34a ein ausgesendeter Strahl 35a und an dem Empfängerteil 34b reflektierter Strahl 35b dargestellt.

In der in den Fig. 1 und 2 gezeigten bevorzugten Ausführungsform ist der Sensor 34 derart ausgebildet, dass der Senderteil 34a, der Empfängerteil 34b und die Schaltung 36 in einem einzigen Gehäuse untergebracht sind. Hierbei wird der aus gesintertem Werkstoff gefertigte Sensorkörper sowohl als Empfängerteil als auch als Senderteil benutzt und in hochfrequenter Folge abwechselnd umgeschaltet. Sensoren dieser Art zeichnen sich durch einen relativ kleinen Platzbedarf aus. In Fig. 3 ist der Sensor 34 dementsprechend mit dem Strahlengang 35 in Form der gestrichelten Linie mit beidseitigen Pfeilen angedeutet.

Die Schaltung 36, der Antriebsmotor 9, in Fig. 3 schematisch als Block 9a dargestellt, die Fadenspannvorrichtung 15, in Fig. 3 schematisch als Block 15a dargestellt und das Stellglied 29, in Fig. 3 schematisch als Block mit 29a dargestellt, sind elektrisch mit einer Eingangs-Ausgangs-Einheit 37 (input-output-unit) verbunden, die Teil einer elektronischen Steuerung 38 ist. Die Eingangs-Ausgangs-Einheit 37 ist schaltungsmäßig mit einem Mikroprozessor 39 verbunden, der einen Rechnerteil 40 mit einem Rechner-Schaltkreis 41, einer Vergleicher-Schaltung 42 und einen Speicherbereich 43 mit einem ersten Speicher 44, einem zweiten Speicher 45, einem dritten Speicher 46 und einem vierten Speicher 47 aufweist. Weiter ist die Steuerung 38 elektrisch mit einem Bedienfeld 48 verbunden, welches mit einer Anzeige-Einheit 49 und einer Tastatur 50 ausgestattet ist.

Die Arbeitsweise der Nähmaschine 1 ist wie folgt:
Es wird davon ausgegangen, dass die Nähmaschine 1 sich nach dem Einschalten des Stroms und gegebenenfalls auch der Bereitstellung von Druckluft für etwaig vorhandene pneumatische Stellglieder in einem betriebsbereiten Zustand befindet, in dem die Auflageplatte 23 frei ist, also noch kein zu nähendes Nähgutteil auf die Auflageplatte 23 aufgelegt ist. Dementsprechend wird die Auflageplatte 23 von dem ausgesendeten Strahlengang 35 des Sensors 34 beaufschlagt. Dies erfolgt durch eine Ansteuerung des Sensors 34, womit eine vorbestimmte Anzahl von Schallwellen von dem Senderteil 34a ausgesendet wird und dann die von der Auflageplatte 23 reflektierten Schallwellen als Echo von dem Empfängerteil 34b empfangen werden. Während dieses Vorgangs wird das Zeitintervall zwischen dem Beginn der Schallwellen-Aussendung und des Empfangs des Schallwellen-Echos ausgemessen. Das Zeitintervall ist ein dem Abstand a des Sensors 34 zu der Auflageplatte 23 proportionaler Wert, so dass damit der Abstand a ausgemessen und in dem ersten Speicher 44 abgelegt wird. Der vorbeschriebene Vorgang wird ständig wiederholt.

Mit dem Einlegen des Nähgutteils 24 erfolgt in gleicher Weise die Ausmessung des Abstands der Differenz a-d1, woraus der Rechner-Schaltkreis 41 in Verbindung mit dem zuvor ermittelten Abstand a die Dicke d 1 errechnen kann, deren Wert dann in dem zweiten Speicher 45 abgelegt wird. Mit der Ermittlung der Dicke d1 des Nähgutteils 24 veranlasst die Steuerung 38 eine Einstellung von Stellwerten des Motors 9 und der Stellglieder 15 und 29, so dass die Nähmaschine damit automatisch auf die für das Nähen des Nähgutteils 24 entsprechenden Werte eingestellt ist. Ja nach der aktuellen Dicke des Nähgutteils werden also die der aktuellen Dicke zugehörige, vorgewählte Einstelldaten aktiviert, die in einer in dem Speicherbereich 43 gespeicherten Tabelle enthalten sind.

Mit dem Vorschieben des Nähgutteil 24 während des Nähens gelangt schließlich eine einlaufende Kante 51 in den Arbeitsbereich des Sensors 34, mit dem nun wiederum die Dicke d2 in der beschriebenen Weise ermittelt und in dem dritten Speicher 46 abgelegt wird. In Kenntnis des konstruktiv vorgegebenen Abstands e des Sensors 34 von der Stichbildestelle 21 berücksichtigt die Steuerung 38, dass zunächst noch eine definierte Stich-Anzahl mit der bisherigen Einstellung des Motors 9 und der Stellglieder 15 und 29 erfolgt. Nach Abarbeitung dieser Stich-Anzahl veranlasst die Steuerung 38 eine erneute Einstellung des Motors 9 und der Stellglieder 15 und 29, wobei die neue Einstellung den Nähbedingungen entspricht, die der Dicke d2 der Nähgutteile 24 und 25 Rechnung tragen.

Mit dem weiteren Nähen gelangt ebenso eine auslaufende Kante 52 des Nähguts 25 in den Arbeitsbereich des Sensors 34, der daraufhin wieder wie nach dem Erfassen der einlaufenden Kante 51 eine dementsprechende Einstellung des Motors 9 und der Stellglieder 15 und 29 veranlasst.

Im Betrieb der Nähmaschine 1 führt der Rechner-Teil 40 mit der Vergleicher-Schaltung 42 laufend einen Vergleich der ermittelten Abstände d1 und d2 mit einem in dem vierten Speicher 47 abgelegten Abstand D durch, der einen Maximalwert repräsentiert. In Fig. 1 ist der Maximalwert durch eine strichpunktierte Linie 53 veranschaulicht. Diese Vorgehensweise ermöglicht, dass Messergebnisse, die durch das Hantieren der Bedienungsperson beim Führen des Nähguts im Arbeitsbereich des Sensors 34 zwar erfasst, letztlich aber ignoriert werden, so dass derartige Messergebnisse zu einer Verhinderung der Auslösung einer Schaltfunktion an den Stellgliedern 9, 15, 29 führen, wenn die Differenz zwischen der ermittelten Nähgutdicke d1 oder d2 kleiner gleich Null ist.

### Bezugszeichenverzeichnis:

- 1: Nähmaschine
- 2: Grundplatte
- 3: Ständer
- 4: Arm
- 5: Kopf
- 6: Armwelle
- 7: Handrad
- 8: Riementrieb
- 9: Antriebsmotor
- 10: Nadelstange
- 11: Nähnadel
- 12: Fadenhebel
- 13: Ende
- 14: Öffnung
- 15: Fadenspannvorrichtung
- 16: Öse
- 17: Öse
- 18: Faden
- 19: Stichplatte
- 20: Stichloch
- 21: Stichbildestelle
- 22: Stoffschieber
- 23: Auflageplatte
- 24: 1. Nähgutteil
- 25: 2. Nähgutteil
- 26: Drückerfuß
- 27: Drückerfuß
- 28: Stoffdrückereinrichtung
- 29: Stellglied
- 30: Vorschubeinrichtung
- 31: Vorschubrichtung
- 32: Fläche
- 33: Haltearm
- 34: Sensor
34a Sender-Teil
34b Empfänger-Teil
- 35: Strahlengang
- 36: Schaltung
- 37: Eingangs-Ausgangs-Einheit
- 38: Steuerung
- 39: Mikroprozessor
- 40: Rechnerteil
- 41: Rechner-Schaltkreis
- 42: Vergleicher-Schaltung
- 43: Speicherbereich
- 44: 1. Speicher
- 45: 2. Speicher
- 46: 3. Speicher
- 47: 4. Speicher
- 48: Bedienfeld
- 49: Anzeige-Einheit
- 50: Tastatur
- 51: einlaufende Kante
- 52: auslaufende Kante
- 53: Linie

- d1, d2, D: Dicke
- a, e: Abstand
- b: Breite
- c: Hub

## Patentansprüche

1. Nähmaschine mit einem Sensor zur Erfassung der Nähgut-Dicke,
mit folgenden Merkmalen:
a) eine Grundplatte (2) mit einer Auflageplatte (23) für ein Nähgutteil (24;24,25)
b) an der Auflageplatte (23) ist ein Ständer (3) mit einem sich daran anschließenden Arm (4) einschließlich einem Kopf (5) ausgebildet,
c) eine Stichbildestelle (21) mit einer Nähnadel (11),
d) eine Vorschubeinrichtung (30) zum Vorschieben des Nähguts (24;24,25) in einer Vorschubrichtung (31),
e) der Sensor (34) mit einer Schaltung (36) zur Abgabe eines der Dicke (d1; d2) des Nähguts (24;24,25) vor der Stichbildestelle (21) entsprechenden Messwertes an eine elektrische Steuerung (3 8),
f) die Steuerung (38) mit einer Einheit (37) zur Abgabe von Schaltbefehlen in Abhängigkeit der erfassten Dicke (d1,d2) an wenigstens ein Stellglied (15,29) und/oder einen Antriebsmotor (9) an der Nähmaschine (1),
**dadurch gekennzeichnet**:
g) der Sensor ist als Ultraschall-Sensor (34) ausgebildet, der einen Sender-Teil (34a) und einen Empfänger-Teil (34b) aufweist,
h) der Sender-Teil (34a) und der Empfänger-Teil (34b) sind in der Vorschubrichtung (31) vor der Stichbildestelle (21) und in einem Abstand (a) von der Auflageplatte (23) oberhalb dieser an dem Kopf (5) der Nähmaschine (1) angeordnet.

2. Nähmaschine nach Anspruch 1, **dadurch gekennzeichnet, dass** der SenderTeil (34a) und der Empfänger-Teil (34b) in einem Gehäuse angeordnet sind.

3. Nähmaschine nach Anspruch 1 oder 2, **gekennzeichnet durch** die Merkmale:
die Steuerung (38) mit einem ersten Speicher (44) zur Aufnahme eines den Abstand (a) zwischen dem Sensor (34) und der Auflageplatte (23) der Nähmaschine (1) repräsentierenden Wertes,
die Steuerung (38) mit einem zweiten Speicher (45) zur Aufnahme eines die Dicke (d1) des Nähguts (24) repräsentierenden zweiten Wertes.

4. Nähmaschine nach Anspruch 3, **gekennzeichnet durch** die Merkmale:
die Steuerung (38) mit einem dritten Speicher (46) zur Aufnahme eines die sich aus dem ersten (24) und einem zweiten Nähgutteil (25) ergebenden Dicke (d2) repräsentierenden dritten Wertes.

5. Nähmaschine nach einem der vorangehenden Ansprüche 3 oder 4, **gekennzeichnet durch** die Merkmale:
die Steuerung (38) mit einem vierten Speicher (47) zur Aufnahme eines Maximalwertes der Dicke (D) als einen vierten Wert,
die Steuerung (38) mit einer Vergleicher-Schaltung (42) zur Ermittlung der Differenz zwischen dem vierten Wert (Dicke D) und dem zweiten Wert (Dicke d1) oder dem dritten Wert (Dicke d2) und Verhinderung der Auslösung einer Schaltfunktion, wenn die Differenz kleiner gleich Null ist.

## Claims

1. A sewing machine with a sensor for the detection of the thickness of a work piece, comprising the following features:
a) a base plate (2) with a bearing plate (23) for a work piece (24; 24, 25);
b) a standard (3) which is formed on the bearing plate (23), having an adjoining arm (4) including a head (5);
c) a stitch-forming place (21) with a sewing needle (11);
d) a feed arrangement (30) for feeding the work piece (24; 24, 25) in a feed direction (31);
e) the sensor (34) having a circuit (36) for transmission, to an electric control system (38), of a measured value that corresponds to the thickness (d1; d2) of the work piece (24; 24, 25) upstream of the stitch-forming place (21);
f) the control system (38) comprising a unit (37) for transmission of alter commands in dependence on the detected thickness (d1, d2) to at least one servo component (15, 29) and/or a driving motor (9) on the sewing machine (1);
**characterized in that**
g) the sensor is an ultrasonic sensor (34) which comprises a transmitter part (34a) and a receiver part (34b); and
h) the transmitter part (34a) and the receiver part (34b) are disposed upstream of the stitch-forming place (21) in the feed direction (31) and above the bearing plate (23) at a distance (a) therefrom on the head (5) of the sewing machine (1).

2. A sewing machine according to claim 1, **characterized in that** the transmitter part (34a) and the receiver part (34b) are disposed in a casing.

3. A sewing machine according to claim 1 or 2, **characterized in that** the control system (38) comprises a first memory (44) for recording a value that represents the distance (a) between the sensor (34) and the bearing plate (23) of the sewing machine (1), and a second memory (45) for recording a second value that represents the thickness (d1) of the work piece (24).

4. A sewing machine according to claim 3, **characterized in that** the control system (38) comprises a third memory (46) for recording a third value that represents the total thickness of the first work piece (24) plus a second work piece (25).

5. A sewing machine according to claims 3 or 4, **characterized in that** the control system (38) comprises a fourth memory (47) for recording a maximum thickness (D) as a fourth value, and a comparator circuit (42) for determining the difference between the fourth value and the second value or the third value, and for preventing an alter command from being triggered when the difference is less than or equal to zero.

## Revendications

1. Machine à coudre avec un capteur de mesure de l'épaisseur du tissu, ayant les caractéristiques suivantes :
a) un socle de base (2) avec une plaque de support (23) pour un morceau de tissu (24 ; 24, 25)
b) sur la plaque de support (23) se trouve un stator (3) conçu avec un bras correspondant à celui-ci(4) incluant une tête (5),
c) un emplacement de formation du point (21) comportant une aiguille à coudre (11),
d) un dispositif d'entraînement (30) pour l'entraînement du tissu (24 ; 24, 25) dans une direction d'entraînement (31),
e) le capteur (34) avec un raccord (36) pour le transfert de la valeur de mesure correspondant à l'épaisseur (d1 ; d2) du tissu (24 ; 24, 25) devant le site de formation des points (21) à une commande électrique (38),
f) la commande (38) avec un élément (37) pour le transfert de la commande de commutation en fonction de l'épaisseur comprise (d1, d2) vers au moins un organe d'actionnement (15, 29) et/ou un moteur d'entraînement (9) de la machine à coudre (1),
**caractérisée en ce que**
g) le capteur est conçu comme un capteur ultra-rapide (34), qui comporte une partie émettrice (34a) et une partie réceptrice (34b),
h) la partie émettrice (34a) et la partie réceptrice (34b) sont disposées dans la direction d'entraînement (31) de l'emplacement de formation des points (21) et à une distance (a) de la plaque de support (23) au dessus de celle-ci au niveau de la tête (5) de la machine à coudre (1).

2. Machine à coudre selon la revendication 1, **caractérisée en ce que** la partie émettrice (34a) et la partie réceptrice (34b) sont disposées dans un logement.

3. Machine à coudre selon la revendication 1 ou 2, **caractérisée par** :
la commande (38) avec une première mémoire (44) pour l'enregistrement d'une valeur représentant la distance (a) entre le capteur (34) et la plaque de support (23) de la machine à coudre (1),
la commande (38) avec une deuxième mémoire (45) pour l'enregistrement d'une deuxième valeur représentant l'épaisseur (d1) du tissu (24).

4. Machine à coudre selon la revendication 3, **caractérisée par** :
la commande (38) avec une troisième mémoire (46) pour l'enregistrement d'une troisième valeur représentant l'épaisseur (d2) découlant de la première (24) et d'une deuxième pièce de tissu (25).

5. Machine à coudre selon l'une quelconque des revendications précédentes 3 ou 4, **caractérisée par** :
la commande (38) avec une quatrième mémoire (47) pour l'enregistrement d'une valeur maximale de l'épaisseur (D) comme quatrième valeur,
la commande (38) avec un circuit-comparateur (42) pour analyser les différences entre la quatrième valeur (épaisseur D) et la deuxième valeur (épaisseur d1) ou la troisième valeur (épaisseur d2) et l'empêchement du déclenchement d'une fonction de commutation, lorsque la différence est inférieure ou égale à zéro.
